# EUROPEAN PATENT SPECIFICATION

(11) **EP 1 132 695 B1**
(45) Date of publication and mention of the grant of the patent: **26.01.2005**
(21) Application number: 00124652.9
(22) Date of filing: 10.11.2000
(51) Int. Cl.: F25B 43/00

(54) **Filter cartridge and condenser**
Filterpatrone und Kondensator
Cartouche de filtre et condenseur

(30) Priority: 09.03.2000 DE 20004438 U
(43) Date of publication of application: 12.09.2001
(73) Proprietor: Finber S.p.A, 43100 Scarzara (Parma) (IT)
(72) Inventor: Bernini, Michele, SKG Italiana SPA, 43040 Scarzara (Parma) (IT)
(74) Representative: Grünecker, Kinkeldey, Stockmair & Schwanhäusser Anwaltssozietät

(56) References cited:
- EP-A- 0 854 058
- FR-A- 2 750 761
- US-A- 5 419 141
- US-A- 5 666 791
- US-A- 5 992 174
- PATENT ABSTRACTS OF JAPAN vol. 1998, no. 04, 31 March 1998 (1998-03-31) & JP 09 324962 A (DENSO CORP), 16 December 1997 (1997-12-16)

## Description

The invention relates to a condenser according to the preamble part of claim 1 and a to a filter cartridge according to the preamble part of claim 4.

FR-A-2 750 761 discloses a filter cartridge mounted into a header pipe of a condenser. The plug, closing the insertion opening, is a part of the filter cartridge. The plug has a small diameter lower section fitted into a collar inside the header pipe and upper, large diameter section, secured in place within said insertion opening. The plug is secured in place either by a threaded connection or by a bayonet connection. To mount or remove the plug and the filter cartridge it is necessary to rotate the plug in the insertion opening, while at the same time a lower sealing equipped end of the filter cartridge has to be forced into a seat opening of the header pipe.

A filter cartridge as known from EP-A-0 669 506 is provided within a collecting tube or header pipe of the condenser and is sealed and positioned by means of a metallic plug screwed into the insertion opening of said tube. Since said filter cartridge is supported in its operating position under a certain axial load, it simultaneously is backed up by the plug. This is a conventional structural principle of filter cartridge equipped condensers. There is a relatively precisely machined and tight thread connection provided between the plug and the insertion opening. This is expensive. However, since the condenser or the condenser housing during manufacturing, e.g. during soldering, is relatively strongly thermally loaded, without the filter cartridge positioned within the header pipe, deformations of the insertion opening might occur so that the plug cannot be screwed in easily later and might not be sufficiently tight. Moreover, further irregularities between the plug and the insertion opening at the threaded connection might result from unavoidable temperature variations and corrosion effects and varying mechanical loads during operation of the condenser. This makes its particularly complicated to remove the plug for a change of the filter cartridge after a long duration use of the condenser. Even if then the plug can be removed in a troublesome way it often cannot be used a second time. Also a new plug then does not fit properly into the insertion opening. This problem might cause expensive and time-consuming re-machining efforts. EP 0 854 058 A discloses a filter cartridge with a plug being part of the filter cartridge. The plug has sealing rings in its periphery and is pressed into the insertion opening such that it can be pulled out for removal of the filter cartridge.

Further prior art can be found in US 5,666,791 A, US 5,992,174 A, US 5 456 161, and US 5,419,141.

It is a task of the invention to provide a condenser with a filter cartridge and a filter cartridge as mentioned above which are structurally simplified for comfortable assembly and dismantling and exchange of the filter cartridge.

Said task can be achieved by the features contained in claim 1 and in claim 4.

The filter cartridge can be assembled easily into the condenser and can be changed at any time through the insertion opening, irrespective of where said insertion opening is located. The plug as a part of the filter cartridge is provided at the respective end of the filter cartridge, and consists expediently of plastic material or light metal. The plug is positioned in the insertion opening by an essential axial pushing movement and does not need a threaded connection. The plug maintains it position with the help of the securing element positively engaging into the inner wall of the insertion opening. The securing element hinders the plug from inadvertently moving out of the insertion opening.

Since the plug is a part of the filter cartridge the separate manufacture of a proper plug is avoided. The plug is mounted in the insertion opening first when also the filter cartridge is inserted. The plug then hermetically seals the insertion opening against the outer environment. Simultaneously the plug takes care of the correct positioning of the cartridge. The plug does not need to be screwed-in so that a threaded connection sensitive to deformation is avoided. The plug, instead, can be pressed in axially and secured in position in the insertion opening by a simple fastening element.

With a view to manufacturing it is of advantage if the plug is a cylindrical body of plastic material or light metal with in-built sealing grooves and a supporting element like a surface for the securing element. The plug is brought into its sealing position essentially only by axially pressing it into the insertion opening. Sealing rings are provided in said grooves, preferably several O-rings, assuring the necessary tightness. The supporting surface bears against the securing element such that the plug and by means of the plug also the filter cartridge remain properly positioned.

The securing element can be a Seeger ring which is available in different sizes and at low cost. Seeger rings are easy to mount and remove and generate the necessary holding force for the plug in a positive fashion.

In another embodiment said securing element may be a clip or a locking pin extending from outside through said header pipe and said plug. The securing element can be removed and mounted comfortably and establishes a high degree of safety against accidental removal. The clip or locking pin may be inserted into a lateral shaft provided in the plug such that the plug neither can be pressed inwardly nor can escape from the header pipe.

Expediently the clip or locking pin has an insertion end and at its opposite end a holding end. The holding end positively is supported at the outer side of the header pipe, while another safety element can be inserted into the protruding insertion end. The safety element may be a spring ring or spring clip or even a lock. The clip or locking pin can be made of metal or plastic material.

Expediently the clip is formed like an elastic tongue which is flat in lateral direction and has a width smaller than the width of the shaft in the plug and is formed with a bend such that it can be held under pre-load when inserted to more safely secure the plug in its position.

The dual function plug made from plastic material or light metal forming a part of the filter cartridge offers the possibility of simple and comfortable assembly of the cartridge into the condenser, since the plug is introduced or pressed into the header pipe together with the filter cartridge until the filter cartridge and the plug reach their respective and correct positions. The plug is able to adapt itself to the shape of the insertion opening, even if the insertion should have been deformed during the thermal treatment of the condenser or condenser housing or deforms during operation. The necessary tightness is assured permanently. Removal, e.g. for exchanging the filter cartridge, of the plug can be carried out comfortably. The plug seals the header tube and positions the cartridge.

As the filter cartridge has to be secured in the long header pipe of the condenser in its correct operating position, it is expedient to provide the filter cartridge with a spacer and to provide the plug directly at the spacer. The plug can be connected detachably with the spacer or can be formed, e.g. from plastic material, unitary with the spacer.

Expediently the spacer comprising the plug is detachably connected to the housing of the filter cartridge. In order to achieve a correct positioning of the filter cartridge it is of advantage to support the spacer in the housing of the filter cartridge in a yieldable fashion (to axially pre-load the cartridge).

For easy removal of the filter cartridge a gripping flap can be formed on the plug.

Alternatively or additionally a seat socket for a sensor and/or a filling valve can be formed in the plug.

The housing of the filter cartridge is equipped in the outlet zone with filter material having small pores the sizes of which suffice to retain even the smallest particles. To the contrary, the inlet zone is provided with micro-bores assuring a strong and uniform flow of the refrigerant towards the desiccant charge within the housing. The micro-bores can be produced far less expensively in an injection mould than to mould a conventional cage-like housing portion. The micro-bores can be formed by needle-like inserts in the injection mould and during the injection process of the housing. Expediently the needle-like inserts extend perpendicular to the mould separation plane such that they can be positioned stationarily within the form and are pulled out from the product when the mould halves are separated.

Embodiments of the invention will be explained with the help of the drawing. In the drawing is:
- Fig. 1: a longitudinal section of a part of a condenser with inserted filter cartridge,
- Fig. 2: a part of another embodiment of a condenser with an inserted filter cartridge, partial in a sectional view,
- Fig. 3: a front view of another embodiment of a filter cartridge,
- Fig. 4: a detail of the filter cartridge of Fig. 3,
- Fig. 5: a part of a further embodiment of a filter cartridge in its operating position in a header pipe of a condenser, and
- Fig. 6, 7 & 8: three interrelated sections of another embodiment.

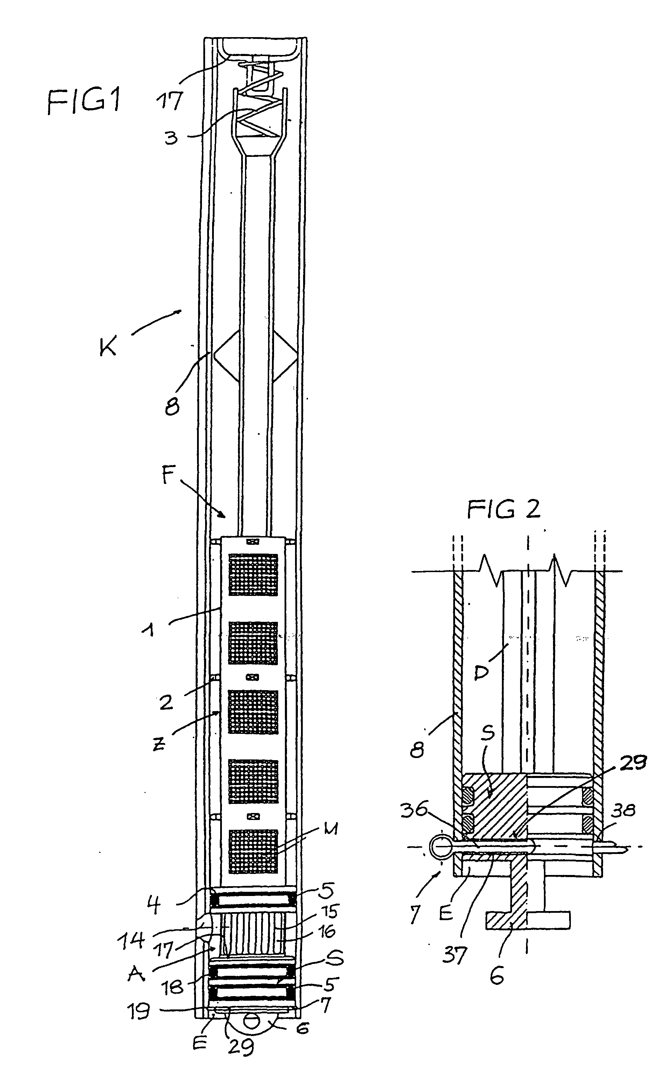

Fig. 1 shows a header pipe 8, e.g. a vertical header pipe at one end of a condenser K, in a longitudinal section. In said header pipe 8 a filter cartridge F is positioned in its operating position. Said filter cartridge F contains inter alia a charge of a desiccant serving to extract water from the refrigerant circulating through the condenser water and also to retain particles contained in the refrigerant. Said filter cartridge F has a generally tube-shaped housing 1 with an inlet zone Z and an outlet zone A. In-between a ring flange 4 carrying at least one sealing element 5 serves as a separation wall co-operating with the header tube 8. Said housing 1 may have integrated distance elements 2. Moreover, at the upper end of housing 1 a spacer 3, e.g. equipped with a spring element, is provided abutting at a cap 17 e.g. soldered into header pipe 8.

In this embodiment filter cartridge F is inserted into the header pipe through a downwardly facing insertion opening E. The filter cartridge is positioned in header pipe 8 by a plug S closing the header pipe insertion opening E. Plug S is made from plastic material or light metal and is part of the filter cartridge F. Plug S is pressed essentially linearly into said insertion opening E and is sealing with the help of O-rings 5. Plug S maintains its position thanks to a securing element 7 which positively is fixed in the mouth of insertion opening E. A gripping flap 6 can be formed a plug S.

Housing 1 has a plurality of micro-bores M in its inlet zone Z. Outlet openings 15 of the housing 1 in said outlet zone A are covered by filter material 16 having fine pores. The refrigerant, mainly in its liquid phase, enters header tube 8, and enters housing 1 through said micro-bores M. From the interior of housing 1 and after having passed at least the desiccant the refrigerant exits through the filter material 16 and leaves said header pipe 8 through a side opening 14.

Fig. 1 shows how securing element 7 is inserted into a groove 19 formed within insertion opening E. It abuts against a supporting element 29 e.g. a surface of plug S. Plug S has circumferential grooves 18 for O-rings 5.

Said micro-bores M expediently are formed during injection moulding of housing 1 by means of needle-shaped inserts in the injection mould. In case that said needle-shaped inserts are oriented perpendicular to the separation plane of the injection mould the final injection moulded product can be removed easily. This is simpler in view to production and the design of the injection mould than to form said inlet zone Z as a cage-like structure. Said plug S in Fig. 1 is either formed unitarily with housing 1 or is fixed thereto.

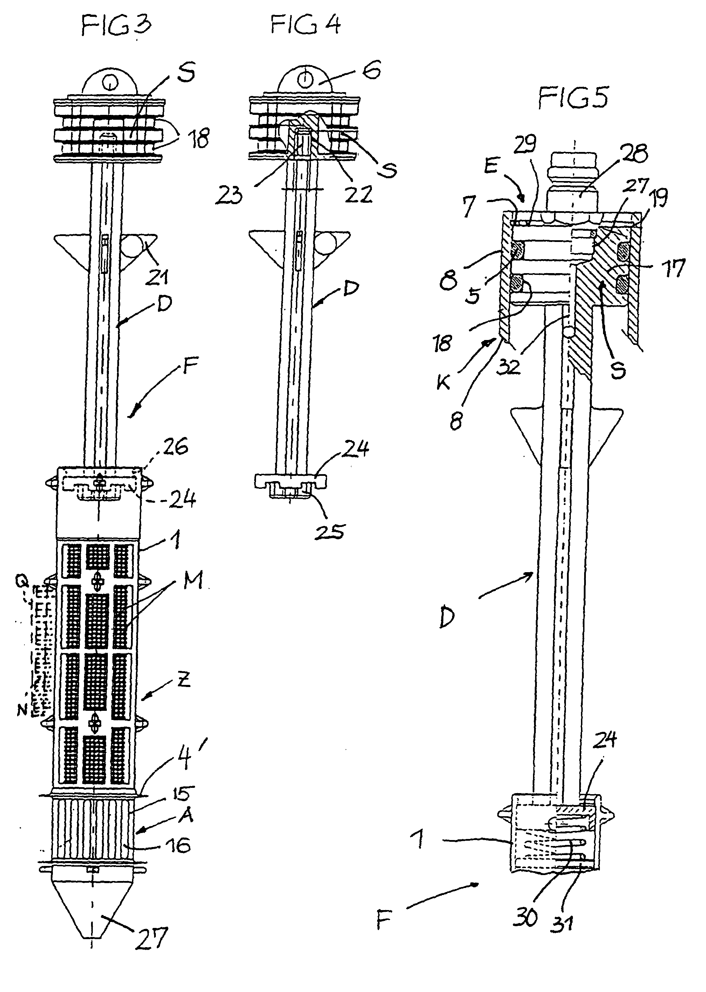

In Fig. 2 said securing element 7 is a clip, splint or locking pin 36 seated within channels 37, 38 provided in plug S and within the wall of header tube 8.

The filter cartridge F as shown in Fig. 3 is intended to be inserted into a header pipe (not shown in Fig. 3) from the upper end. The inlet zone Z of housing 1 is defined by a plurality of micro-bores M. Said inlet zone Z is separated from the outlet zone A by a sealing lip 4'. In order to position the housing 1 deep enough essentially within the liquid phase of the refrigerant in header pipe 8, a spacer D is connected to the housing 1. Said spacer D carries plug S at its end opposite to housing 1. Sidewardly oriented wings 21 on spacer D serve to centre it within the header tube 8. Housing 1 is formed with an upper opening and an annular inner flange 26. A lower flange 24 of spacer D can be forced by resilient deformation past said annular flange 26 in order to connect the spacer D and the housing 1, e.g. after inserting the desiccant-charge.

According to Fig. 4 the plug S is designed with a lower threaded blind bore 22 into which a threaded protrusion 23 of spacer D is screwed. The lower flange 24 is positioned at spacer D by means of a locking nut 25.

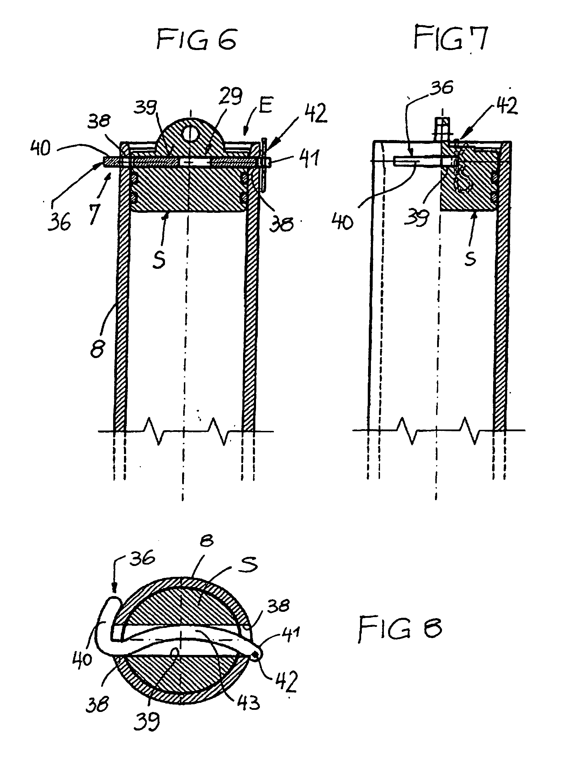

In the embodiment of Fig. 5 the filter cartridge F is provided, similarly as in Fig. 3, with a lower housing 1 and an upper spacer D. Spacer D rests with its flange 24 on a compression spring 30 supported by a lid 31 within housing 1, such that housing 1 is pre-loaded downwardly in its working position, once spacer D and plug S are correctly positioned by securing element 7. Plug S is unitarily provided at the upper end of spacer D and is made from the same plastic material or light metal as the spacer. The plug is provided in an upper insertion opening E of header pipe 8 and is secured in its position without a threaded connection by securing element 7, e.g. a Seeger-ring, seated in a groove 19 in the mouth of insertion opening E. Securing element 7 abuts supporting surface 29 of plug S. In this embodiment plug S is provided with a socket 27 for e.g. a sensor or a filling fitting 28 with a filling valve. A channel 32 leads from socket 27 downwardly to the side of spacer D.

During assembly of the filter cartridge F into header pipe 8 of the condenser K first the filter cartridge F is inserted until plug S has reached the proper position. Then securing element 7 is inserted. In order to change the filter cartridge the securing element 7 is removed and the filter cartridge then can be pulled out, e.g. by means of gripping flap 6.

In Figs 6, 7 and 8 securing element 7 is clip 36 of a special design inserted into openings 38 in the wall of the header pipe 8 and in a lateral shaft 39 formed within plug S and defining said supporting element 29. Both ends 40, 41 of said clip 36 protrude beyond the wall of header pipe 8. The clip 36 can be made from metal or plastic and is designed as a flat, elastic tongue in Fig. 6 having, according to the view of Fig. 8, an arc-shaped bend 43. Since lateral shaft 39 is broader perpendicular to the axis of header pipe 8 than the width of clip 36, but the bend 43 is stronger than the width of the lateral shaft 39 the inserted clip 36 is pre-loaded. It is supported by said pre-load within openings 38 and at the wall of lateral shaft 39. Holding end 40, e.g. a sidewards bent end portion, abuts the outer side of header pipe 8. Insertion end 41 protruding at the opposite side receives safety element 42 (e.g. a spring ring or a spring clip as shown in Fig. 7) or even a lock preventing that clip 36 can be pulled out accidentally.

The clip system can be manufactured with low cost, because e.g. the openings in the header pipe as well as the lateral shaft in the plug can be formed by pressing or injection moulding.

## Claims

1. Condenser (K), particularly for an automobile air-conditioning system, comprising a header tube (8) having an insertion opening (E), a filter cartridge (F) removably positioned within said header pipe (8) and containing desiccant, and comprising a plug (S) made from plastic material or light metal as a part of said filter cartridge (F) and sealingly closing said insertion opening (E), **characterised in that** said plug (S) is pressed axially into said upwardly facing or downwardly facing insertion opening (E) and is secured within said insertion opening (E) by means of a securing element (7) engaging into the wall of said insertion opening (E) and abutting against an outer supporting element (29) of said plug (S), that said securing element (7) either is a Seeger ring seated in a groove (19) of said insertion opening (E) and abutting against a surface of said plug, or is a metal or plastic material clip or locking pin (36) extending from outside through the wall of said header pipe (8) and through a lateral shaft (39) formed within said plug (S), and that either an outer pull-out gripping flap (6) is formed at said plug (S) or a socket (27) for a sensor or a filling valve fitting (28) is provided within said plug (S).

2. Condenser as in claim 1, **characterised in that** said clip or locking pin (36) has an insertion end (41) and a holding end (40), said holding end positively abutting the outer side of said header pipe (8), said insertion end (41) where protruding beyond said header pipe (8) contains an additional safety element (42) blocking said clip or locking pin (36) against being pulled out.

3. Condenser as in claim 2, **characterised in that** said clip or locking pin (36) is formed as an elastic tongue with a width perpendicular to the axis of said header pipe smaller than the width of said lateral shaft (39) in said plug (S) and having an arc-shaped bend (43) in width direction such that the inserted clip or locking pin (36) is pre-loaded in bending direction in openings (38) of the wall of said header pipe (8) and within said lateral shaft (39).

4. Filter cartridge (F) for a condenser (K), particularly for an automotive air-conditioning system, comprising a permeable housing (1) containing at least one desiccant charge, which housing is insertable through an insertion opening (E) into a header pipe (8) of said condenser (K) and a light metal or plastic material plug (S) as a part of said filter cartridge (F) for closing the insertion opening (E), **characterised in that** said plug (S) is a generally cylindrical body (17) comprising at least one circumferential groove (18) for a sealing element (5), comprising a securing element (7) and an axial supporting element (29) for the securing element (7) which either is a Seeger-ring abutting surface of said plug (S) or a lateral clip or locking pin (36) extending through a lateral shaft (39) formed within said plug (S), and that either an outer pull-out gripping flap (6) is formed at said plug (S) or a socket (27) for a sensor or a filling valve fitting (28) is provided within said plug (S).

5. Filter cartridge as in claim 4, **characterised in that** said housing (1) of said filter cartridge (F) has a longitudinal spacer (D), said plug (S) being provided at a free end of said spacer (D), that said spacer (D) is separable from said housing (1) at its end opposite to said plug (S), and that said spacer (D) is yieldably supported within said housing (1), preferably by means of a spring (30).

6. Filter cartridge as in claim 4, **characterised in that** said housing (1) is separated into an inlet zone (Z) and an outlet zone (A) both separated by an outer sealing lip (4') or an annular flange (4), that in said outlet zone (A) a filter fabric element (16) with fine pores is provided, while in said inlet zone (Z) micro-bores (M) are formed in the wall of said housing (1), and that said micros-bores (M) are formed by needle-shaped inserts in an injection mould for forming said housing (1).

## Patentansprüche

1. Kondensator (K), insbesondere für ein Fahrzeug-Klimaanlagen-System, mit einem eine Einführöffnung (E) aufweisenden Sammelrohr (8), in dem eine ein Trocknungsmittel enthaltende Filterpatrone (F) herausnehmbar positioniert ist, und mit einem die Einführöffnung (E) abdichtend verschließenden Stopfen (S) aus Kunststoff oder Leichtmetall, **dadurch gekennzeichnet, dass** der Stopfen (S) axial in die nach oben oder nach unten weisende Einführöffnung (E) eingepresst und in der Einführöffnung (E) mittels eines Sicherungselementes (7) festgelegt ist, das in die Wand der Einführöffnung (E) eingreift und gegen ein äußeres Stützelement (29) des Stopfens (S) anliegt, dass das Sicherungselement (7) entweder ein in einer Nut (19) der Einführöffnung (E) sitzender und gegen eine Oberfläche des Stopfens anliegender Seeger-Ring oder ein Metall- oder Kunststoff-Clips oder Verriegelungsstift (36) ist, der sich von außerhalb durch die Wand des Sammelrohres (8) und durch einen in dem Stopfen (S) ausgebildeten Querschacht (39) erstreckt, und dass entweder an dem Stopfen (S) eine äußere Herauszieh-Greiflasche (6) geformt oder in dem Stopfen (S) eine Aufnahme (27) für einen Sensor oder einen Füllventilfitting (28) vorgesehen ist.

2. Kondensator nach Anspruch 1, **dadurch gekennzeichnet, dass** der Clips oder der Verriegelungsstift (36) ein Einsetzende (41) und ein Halteende (40) aufweist, dass das Halteende formschlüssig an der Außenseite des Sammelrohres (8) anliegt, und dass das Einsetzende (41) dort, wo es über das Sammelrohr (8) vorsteht, ein zusätzliches Sicherungselement (42) enthält, das den Clips oder den Verriegelungsstift (36) gegen Herausziehen blockiert.

3. Kondensator nach Anspruch 2, **dadurch gekennzeichnet, dass** der Clips oder der Verriegelungsstift (36) als eine elastische Zunge ausgebildet ist mit einer Weite, die senkrecht zu der Achse des Sammelrohres kleiner ist als die Weite des Querschachts (39) in dem Stopfen (S), und die in Weitenrichtung eine bogenförmige Biegung (43) aufweist, derart, dass der eingesetzte Clips oder der Verriegelungsstift (36) in Biegerichtung in Öffnungen (38) der Wand des Sammelrohres (8) und innerhalb des Querschachts (39) vorgespannt ist.

4. Filterpatrone (F) für einen Kondensator (K), insbesondere für ein Fahrzeug-Klimaanlagen-System, mit einem wenigstens eine Trocknungsmittel-Charge enthaltenden, durchlässigen Gehäuse (1), das durch eine durch einen Stopfen (S) aus Kunststoff oder Leichtmetall als Teil der Filterpatrone (F) verschlossene Einführöffnung (E) in ein Sammelrohr (8) des Kondensators (K) eingesetzt ist, **dadurch gekennzeichnet, dass** der Stopfen (S) ein allgemein zylindrischer Körper (17) mit zumindest einer Umfangsnut (18) für ein Dichtungselement (5) ist und ein Sicherungselement (7) und ein axiales Stützelement (29) für das Sicherungselement (7) aufweist, das entweder ein an einer Oberfläche des Stopfens (S) anliegender Seeger-Ring oder ein Querclips oder -verriegelungsstift (36) ist, der sich durch einen in dem Stopfen (S) geformten Querschacht (39) erstreckt, und dass entweder an dem Stopfen (S) eine äußere Herauszieh-Greiflasche (6) geformt oder in dem Stopfen (S) eine Aufnahme (27) für einen Sensor oder einen Füllventil-Fitting (28) vorgesehen ist.

5. Filterpatrone nach Anspruch 4, **dadurch gekennzeichnet, dass** das Gehäuse (1) einen langgestreckten Distanzhalter (D) aufweist, dass der Stopfen (S) an einem freien Ende des Distanzhalters (D) angeordnet ist, dass der Distanzhalter (D) an seinem dem Stopfen (S) abgewandten Ende trennbar mit dem Gehäuse (1) verbunden ist, und dass der Distanzhalter (D) im Gehäuse (1) nachgiebig, vorzugsweise mittels einer Feder (30), abgestützt ist.

6. Filterpatrone nach Anspruch 4, **dadurch gekennzeichnet, dass** das Gehäuse (1) in einen Zulaufbereich (Z) und einen Ablaufbereich (A) unterteilt ist, die durch eine außenliegende Dichtlippe (4') oder einen Ringflansch (4) voneinander getrennt sind, dass im Auslaufbereich (A) ein feinporiges Filtergewebeelement (16), während im Zulaufbereich (Z) hingegen in die Gehäusewand eingeformte Mikrobohrungen (M) vorgesehen sind, und dass die Mikrobohrungen (M) durch nadelartige Einsätze in der Spritzform für das Gehäuse (1) geformt sind.

## Revendications

1. Condenseur (K), particulièrement pour un système de climatisation d'automobile, comprenant un tube de collecteur (8) comportant une ouverture d'insertion (E), une cartouche de filtre (F) positionnée de manière amovible dans ledit tube de collecteur (8) et contenant un dessiccatif, et comprenant un bouchon (S) réalisé en une matière plastique ou en un métal léger en tant que partie de ladite cartouche de filtre (F) et fermant hermétiquement ladite ouverture d'insertion (E), **caractérisé en ce que** ledit bouchon (S) est pressé axialement dans ladite ouverture d'insertion (E) orientée vers le haut ou orientée vers le bas et est fixé dans ladite ouverture d'insertion (E) au moyen d'un élément de fixation (7) s'engageant dans la paroi de ladite ouverture d'insertion (E) et en butée contre un élément de support extérieur (29) dudit bouchon (S), **en ce que** ledit élément de fixation (7) est soit une bague de Seeger reposant dans une gorge (19) de ladite ouverture d'insertion (E) et en butée contre une surface dudit bouchon, soit une attache ou tige de blocage (36) en un métal ou en une matière plastique s'étendant de l'extérieur à travers la paroi dudit tube de collecteur (8) et à travers un alésage latéral (39) formé sur ledit bouchon (S), et **en ce que** soit une patte de préhension et de traction extérieure (6) est formée au niveau dudit bouchon (S), soit une embase (27) pour un capteur ou un raccord de vanne de remplissage (28) est prévu dans ledit bouchon (S).

2. Condenseur selon la revendication 1, **caractérisé en ce que** ladite attache ou tige de blocage (36) comporte une extrémité d'insertion (41) et une extrémité de maintien (40), ladite extrémité de maintien étant positivement en butée contre le côté extérieur dudit tube de collecteur (8), ladite extrémité d'insertion (41) là où elle fait saillie au-delà dudit tube de collecteur (8) contient un élément de sécurité (42) supplémentaire empêchant le retrait de ladite attache ou tige de blocage (36).

3. Condenseur selon la revendication 2, **caractérisé en ce que** ladite attache ou tige de blocage (36) est formée comme une languette élastique avec une largeur perpendiculaire à l'axe dudit tube de collecteur inférieure à la largeur dudit alésage latéral (39) dans ledit bouchon (S), et comporte un coude en forme d'arc (43) dans la direction de la largeur de sorte que l'attache ou tige de blocage (36) insérée soit précontrainte dans une direction de cintrage dans des ouvertures (38) de la paroi dudit tube de collecteur (8) et dans ledit alésage latéral (39).

4. Cartouche de filtre (F) pour un condenseur (K), particulièrement pour un système de climatisation d'automobile, comprenant un logement perméable (1) contenant au moins une charge de dessiccatif, lequel logement peut être inséré à travers une ouverture d'insertion (E) dans un tube de collecteur (8) dudit condenseur (K) et un bouchon en métal léger ou en matière plastique (S) en tant que partie de ladite cartouche de filtre (F) pour fermer l'ouverture d'insertion (E), **caractérisée en ce que** ledit bouchon (S) est un corps généralement cylindrique (17) comprenant au moins une gorge circonférentielle (18) pour un élément d'étanchéité (5), comprenant un élément de fixation (7) et un élément de support axial (29) pour l'élément de fixation (7) qui est soit une surface de butée de bague de Seeger dudit bouchon (S), soit une attache ou tige de blocage (36) s'étendant à travers un alésage latéral (39) formé dans ledit bouchon (S), et **en ce que** soit une patte de préhension et de traction extérieure (6) est formée sur ledit bouchon (S), soit une embase (27) pour un capteur ou un raccord de vanne de remplissage (28) est prévu dans ledit bouchon (S).

5. Cartouche de filtre selon la revendication 4, **caractérisée en ce que** ledit logement (1) de ladite cartouche de filtre (F) comporte une entretoise longitudinale (D), ledit bouchon (S) étant prévu à une extrémité libre de ladite entretoise (D), **en ce que** ladite entretoise (D) peut être séparée dudit logement (1) à son extrémité opposée audit bouchon (S), et **en ce que** ladite entretoise (D) est supportée de manière élastique dans ledit logement (1), de préférence au moyen d'un ressort (30).

6. Cartouche de filtre selon la revendication 4, **caractérisée en ce que** ledit logement (1) est séparé en une zone d'entrée (Z) et une zone de sortie (A) toutes deux séparées par une lèvre d'étanchéité extérieure (4') ou par un rebord annulaire (4), **en ce qu'**un élément en toile filtrante (16) comportant de fins orifices est prévu dans ladite zone de sortie (A), tandis que des micro-trous (M) sont formés dans la paroi dudit logement (1) dans ladite zone d'entrée (Z), et **en ce que** lesdits micro-trous (M) sont formés par des inserts semblables à des aiguilles dans un moule d'injection pour former ledit logement (1).
